# FASCICULE DE BREVET EUROPEEN

(11) **EP 4 073 906 B1**
(45) Date de publication et mention de la délivrance du brevet: **15.10.2025**
(21) Numéro de dépôt: 20820224.2
(22) Date de dépôt: 10.12.2020
(51) Int. Cl.: H02K 1/276

(54) **ROTOR EINER ROTIERENDEN ELEKTRISCHEN MASCHINE UND ROTIERENDE ELEKTRISCHE MASCHINE**
ROTOR EINER ELEKTRISCH UMLAUFENDEN MASCHINE UND ROTIERENDE ELEKTRISCHE MASCHINE
ROTOR OF A ROTATING ELECTRICAL MACHINE AND ROTATING ELECTRICAL MACHINE

(30) Priorité: 10.12.2019 FR 1914027
(43) Date de publication de la demande: 19.10.2022
(73) Titulaire: Valeo Electrification, 95800 Cergy (FR)
(72) Inventeur: HUSSON, Pierrick, 94046 CRETEIL CEDEX (FR); RIVALS, Alexis, 94046 CRETEIL CEDEX (FR); LABROSSE, Jean-Claude, 94046 CRETEIL CEDEX (FR)
(74) Mandataire: Valeo Powertrain Systems
(86) Numéro de dépôt international: PCT/EP2020/085630
(87) Numéro de publication internationale: WO 2021/116342

(56) Documents cités:
- EP-A2- 2 696 470
- WO-A1-2017/076461
- WO-A2-2014/082839
- DE-A1- 102016 218 540

## Description

L'invention porte sur un rotor de machine électrique tournante et une machine électrique tournante équipée d'un tel rotor.

Il est connu des demandes de brevet WO 2014/082839 A2, WO 2017/076461 A1, EP 2 696 470 A2, DE 10 2016 218 540 A1 et US2015/0364959A1 un rotor pour machine électrique tournante,
apte à interagir avec un stator de la machine électrique tournante et en rotation par rapport à un axe de rotation, le rotor comprenant :
- un corps de rotor comportant une cavité,
- un aimant permanent disposé dans la cavité, l'aimant permanent ayant une première longueur selon la direction de l'axe de rotation,

le corps de rotor comprenant une partie de maintien de l'aimant sur laquelle est en appui l'aimant permanent et apte à être en regard du stator, la partie de maintien de l'aimant ayant une deuxième longueur selon la direction de l'axe de rotation entre une première face de la partie de maintien et une deuxième face de la partie de maintien,
la première longueur de l'aimant permanent étant égale ou inférieure à la deuxième longueur de la partie de maintien.

Un tel rotor présente l'inconvénient d'engendrer des pertes magnétiques entre l'aimant permanent et le stator. En effet l'aimant permanent utilisé comprend souvent des arêtes adoucies à ses extrémités, par exemple avec un congé. Ces arêtes adoucies sont liées à des contraintes de fabrication des aimants permanents. Les aimants permanents avec de telles arêtes adoucies ont pour effet d'augmenter localement l'entrefer entre le rotor et le stator. Cette augmentation de l'entrefer a pour inconvénient d'augmenter les pertes magnétiques et donc de réduire la puissance de la machine électrique.

La présente invention vise à supprimer tout ou partie de ces inconvénients.

L'invention porte sur un rotor pour machine électrique tournante selon la revendication apte à interagir avec un stator de la machine électrique tournante et en rotation par rapport à un axe de rotation, le rotor comprenant :
- un corps de rotor comportant une cavité,
- un aimant permanent disposé partiellement dans la cavité, l'aimant permanent ayant une première longueur selon la direction de l'axe de rotation entre une première face de l'aimant permanent d'une première extrémité de l'aimant permanent et une deuxième face de l'aimant permanent d'une deuxième extrémité de l'aimant permanent,

le corps de rotor comprenant une partie de maintien de l'aimant permanent sur laquelle est en appui l'aimant permanent et apte à être radialement en regard du stator, la partie de maintien de l'aimant permanent ayant une deuxième longueur selon la direction de l'axe de rotation entre une troisième face de la partie de maintien et une quatrième face de la partie de maintien,
la première longueur de l'aimant permanent étant supérieure à la deuxième longueur de la partie de maintien.

L'utilisation d'un aimant permanent plus long que la partie de maintien du corps de rotor permet d'améliorer les performances de la machine électrique tournante dans laquelle est monté le rotor. En effet les aimants permanent présentent, à leurs extrémités, une surface de jonction entre deux surfaces par exemple entre deux surface planes. La surface de jonction est par exemple un congé ou un chanfrein. L'utilisation d'un aimant plus long que la partie de maintien du corps de rotor permet de décaler tout ou partie de cette surface de jonction à l'extérieur de la partie de maintien. Ainsi on réduit ou même évite une augmentation apparente de l'entrefer entre le stator et le rotor aux extrémités du corps de rotor. Les pertes magnétiques sont donc réduites et les performances de la machine électrique tournante sont améliorées.

Selon une caractéristique de l'invention, la première extrémité de l'aimant permanent dépasse, d'une troisième longueur selon la direction de l'axe de rotation, de la cavité par rapport à l'une des troisième face de la partie de maintien et quatrième face de la partie de maintien.

Selon une caractéristique supplémentaire de l'invention, la deuxième extrémité de l'aimant permanent dépasse, d'une quatrième longueur selon la direction de l'axe de rotation, de la cavité par rapport à l'autre des troisième face de la partie de maintien et quatrième face de la partie de maintien.

Un aimant permanent dépassant à ces deux extrémités de la partie de maintien du corps de rotor permet une réduction des pertes magnétiques aux extrémités et donc une amélioration des performances de la machine électrique tournante plus importante.

La troisième longueur et la quatrième longueur sont égales ou différentes.

Selon une caractéristique de l'invention, le rotor comprend un premier flasque de fermeture, le premier flasque de fermeture comprenant un premier logement recevant la première extrémité de l'aimant permanent.

L'utilisation d'un tel premier flasque permet de faciliter la fabrication du rotor. En effet le premier logement étant réalisé dans le flasque préalablement à l'assemblage du rotor, une grande variété de matériau peut être utilisée pour la réalisation du premier flasque. Par exemple, il n'est pas nécessaire de chauffer le rotor pendant son assemblage. Cette possible absence d'apport de chaleur permet d'éviter la déformation des pièces du rotor et la démagnétisation des aimants pendant l'assemblage.

Selon une caractéristique de l'invention, le rotor comprend un deuxième flasque de fermeture. Le deuxième flasque de fermeture peut comprendre un deuxième logement recevant la deuxième extrémité de l'aimant permanent.

L'utilisation de flasques de fermeture permet de maintenir ensemble le corps du rotor notamment quand il est formé par un empilage de tôles. Pour assurer ce maintien, un moyen de fixation, composé d'un ensemble vis et écrou, permet la fixation des premier flasque de fermeture et deuxième flasque de fermeture sur le corps de rotor.

De plus les flasques de fermeture peuvent être utilisé pour équilibrer le rotor notamment par enlèvement de matière sur les flasques de fermeture. Les logements dans les flasques de fermeture permettent l'accueil des extrémités de l'aimant permanent.

Les logements peuvent être dimensionnés pour éviter le contact avec l'aimant permanent lors de l'assemblage des flasques de fermeture. Ainsi l'aimant permanent n'est pas contraint lors de l'assemblage des flasques de fermeture.

Selon une caractéristique supplémentaire de l'invention, la partie de maintien comprend une dent d'orientation circonférentielle par rapport à l'axe de rotation pour maintenir radialement l'aimant permanent.

Selon une caractéristique supplémentaire de l'invention, la première extrémité de l'aimant permanent comprend une première face de jonction, notamment un congé, entre une cinquième face de l'aimant permanent maintenue par la partie de maintien et la première face de l'aimant permanent,

la première face de jonction faisant face au stator et s'étendant sur une cinquième longueur dans la direction de l'axe de rotation, la cinquième longueur étant comprise entre 0,5 et 2 fois la troisième longueur, notamment entre 0,6 et 1,5 fois la troisième longueur.

L'utilisation d'une cinquième longueur comprise entre 0,5 et 2 fois la troisième longueur, notamment entre 0,6 et 1,5 fois la troisième longueur, permet d'assurer une amélioration des performances de la machine électrique tournante tout en limitant une augmentation de l'encombrement axial du rotor.

Selon une caractéristique supplémentaire de l'invention, la deuxième extrémité de l'aimant permanent comprend une deuxième face de jonction, notamment un congé, entre une cinquième face de l'aimant permanent maintenue par la partie de maintien et la deuxième face de l'aimant permanent,

la deuxième face de jonction faisant face au stator et s'étendant sur une sixième longueur dans la direction de l'axe de rotation, la sixième longueur étant comprise entre 0,5 et 2 fois la quatrième longueur, notamment entre 0,6 et 1,5 fois la quatrième longueur.

L'utilisation d'une sixième longueur comprise entre 0,5 et 2 fois la quatrième longueur, notamment entre 0,6 fois et 1,5 fois la quatrième longueur, permet d'assurer une amélioration des performances de la machine électrique tournante tout en limitant une augmentation de l'encombrement axial du rotor. Selon une caractéristique supplémentaire de l'invention, l'aimant permanent est un aimant permanent de type ferrite.

Selon une caractéristique supplémentaire de l'invention, l'aimant permanent est maintenu dans la cavité par un vernis ou une colle.

L'invention porte également sur une machine électrique tournante comprenant :
- un rotor tel que décrit précédemment,
- un stator.

Selon une caractéristique supplémentaire de l'invention, le rotor est radialement, par rapport à l'axe de rotation, à l'intérieur du stator.

La machine électrique tournante peut comprendre un composant électronique de puissance, apte à être connecté au réseau de bord d'un véhicule. Ce composant électronique de puissance comprend par exemple un onduleur/redresseur permettant, selon que la machine électrique fonctionne en moteur ou en génératrice, de charger un réseau de bord du véhicule ou d'être électriquement alimenté depuis ce réseau.

La machine électrique tournante peut encore comprendre une poulie ou tout autre moyen de liaison vers le reste du groupe motopropulseur du véhicule. La machine électrique est par exemple reliée, notamment via une courroie, au vilebrequin du moteur thermique du véhicule. En variante, la machine électrique est reliée à d'autres emplacement du groupe motopropulseur, par exemple à l'entrée de la boîte de vitesses du point de vue du couple transitant vers les roues du véhicule, en sortie de la boîte de vitesses du point de vue du couple transitant vers les roues du véhicule, au niveau de la boîte de vitesses du point de vue du couple transitant vers les roues du véhicule, ou encore sur le train avant ou le train arrière de ce groupe motopropulseur.

L'invention pourra être mieux comprise à la lecture de la description qui va suivre d'exemples non limitatifs de mise en œuvre de celle-ci et à l'examen du dessin annexé sur lequel :
- la figure 1 représente une vue partielle en coupe d'une machine électrique tournante comprenant un rotor selon l'invention,
- la figure 2 représente une vue partielle en coupe du rotor de la machine électrique tournante de la figure 1,
- la figure 3 représente une autre vue partielle en coupe du rotor de la machine électrique tournante de la figure 1,
- la figure 4 représente un flasque de fermeture du rotor de la machine électrique tournante de la figure 1,
- la figure 5 représente une autre vue partielle en coupe du rotor de la machine électrique tournante de la figure 1,
- la figure 6 représente un aimant du rotor de la machine électrique tournante de la figure 1.

Sur toutes les figures, les éléments identiques ou assurant la même fonction portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

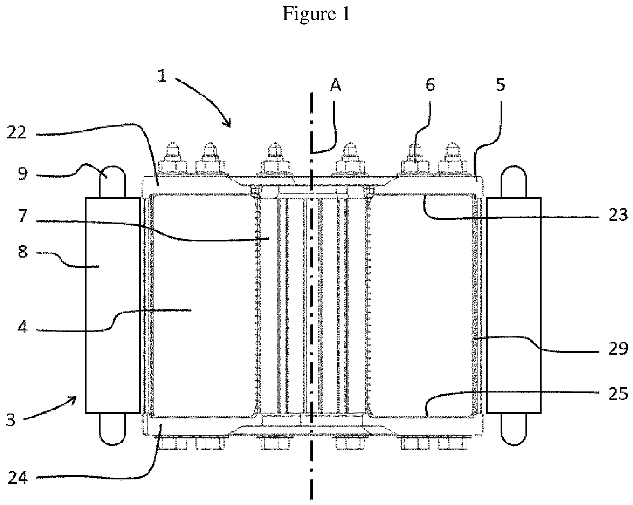

La figure 1 représente une vue partielle d'une machine électrique d'axe de rotation A. Pour une meilleure lisibilité, certaines pièces n'ont pas été représentées.

La machine électrique comprend un rotor 1 et un stator 3.

Le stator 3 comprend par exemple un corps de stator 8 et des enroulements de phase 9.

Le rotor 1 comprend :
- un corps de rotor 7 comportant une cavité 10,
- un aimant permanent 4 disposé partiellement dans la cavité 10.

L'aimant permanent 4 est par exemple un aimant permanent de type ferrite.

Dans un autre mode de réalisation l'aimant permanent est un aimant de type terres rares.

Dans un autre mode de réalisation l'aimant permanent comprend un ensemble d'aimants assemblés en eux. Les aimants assemblés entre eux peuvent être de types différents, par exemple de type ferrite et de type terres rares.

L'aimant permanent 4 comprend une première face 11 à une première extrémité 14 de l'aimant permanent 4 et une deuxième face 12 à une deuxième extrémité 15 de l'aimant permanent 4. Une première longueur 13 est définie, selon la direction de l'axe de rotation A entre la première face 11 et la deuxième face 12. La première face 11 et la deuxième face 12 sont par exemple parallèles.

Le corps de rotor 7 comprend par exemple un empilage de tôles magnétiques. Le corps de rotor peut être monté sur un arbre non représenté sur les figures.

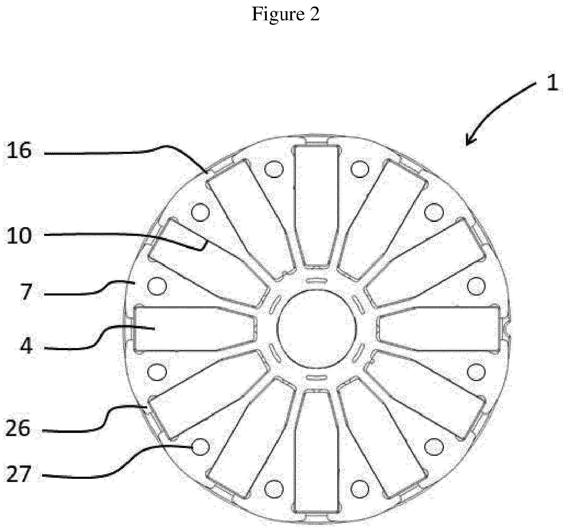

Comme représenté sur la figure 2, le corps de rotor 7 comprend une partie de maintien 16 de l'aimant permanent 4. L'aimant permanent 4 est en appui sur la partie de maintien 16. L'appui de l'aimant permanent 4 sur la partie de maintien peut être réalisé directement ou indirectement. Il est par exemple réalisé par l'intermédiaire d'une plaquette 29 ou une laminette. Une telle plaquette 29 est fabriquée dans un matériau plus souple que l'aimant permanent 4. La plaquette 29 est par exemple réalisée en un matériau plastique ou composite notamment une résine chargée avec des fibres de verre. La plaquette 29 est positionnée entre la partie de maintien 16 et l'aimant permanent 4. La plaquette 29 permet d'améliorer le contact entre la partie de maintien 16 et l'aimant permanent 4.

La partie de maintien comprend par exemple une dent 26 d'orientation circonférentielle par rapport à l'axe de rotation A pour maintenir radialement l'aimant permanent 4. L'appui de l'aimant permanent 4 sur la partie de maintien peut alors être réalisé sur une face de la dent 26.

Dans un autre mode de réalisation non représenté, la partie de maintien est continue circonférentiellement. L'aimant permanent est alors dit enterré.

Dans le mode de réalisation représenté sur les figures, le rotor comprend une pluralité d'aimants permanents 4, chacun disposé dans une cavité 10 différente. Chaque aimant permanent est maintenu par deux dents 26 de directions circonférentielles opposées. La cavité 10 est ouverte radialement entre les deux dents 26.

La partie de maintien 16 de l'aimant permanent 4 est radialement en regard du stator 3. La partie de maintien 16 s'étend sur une deuxième longueur 19 selon la direction de l'axe de rotation A entre une troisième face 17 de la partie de maintien et une quatrième face 18 de la partie de maintien.

La plaquette 29 a par exemple une longueur supérieure ou égale à la deuxième longueur.

La première longueur 13 de l'aimant permanent 4 est supérieure à la deuxième longueur 19 de la partie de maintien 16.

La première extrémité 14 de l'aimant permanent 4 dépasse, d'une troisième longueur 20 selon la direction de l'axe de rotation A, de la cavité 10 par rapport à l'une des troisième face 17 de la partie de maintien 16 et quatrième face 18 de la partie de maintien 16.

En outre la deuxième extrémité 15 de l'aimant permanent 4 peut dépasser, d'une quatrième longueur 21 selon la direction de l'axe de rotation A, de la cavité 10 par rapport à l'autre des troisième face 17 de la partie de maintien 16 et quatrième face de la partie de maintien 16. Ainsi l'aimant permanent dépasse aux deux extrémités 14, 15 de la partie de maintien.

Le corps de rotor 7 peut avoir une longueur égale à la deuxième longueur 19 de la partie de maintien 16. Comme vu précédemment le corps de rotor peut comprendre un empilement de tôle. Chacune des tôles, de forme similaire, peut alors comprendre fraction de la dent 26.

Comme représenté sur la figure 1, le rotor 1 peut comprendre un premier flasque de fermeture 22. Le premier flasque de fermeture 22 comprend un premier logement 23 recevant la première extrémité 14 de l'aimant permanent 4.

En outre le rotor 1 peut comprendre un deuxième flasque de fermeture 24. Le deuxième flasque de fermeture 24 comprend un deuxième logement 25 recevant la deuxième extrémité 15 de l'aimant permanent 4.

Les premier flasque de fermeture 22 et deuxième flasque de fermeture 24 peuvent assurer une fonction de disque d'équilibrage du rotor 1. L'équilibrage est par exemple réalisé par enlèvement de matière sur les premier flasque de fermeture 22 et/ou deuxième flasque de fermeture 24.

Les premier flasque de fermeture 22 et deuxième flasque de fermeture 24 sont par exemple réalisé dans un matériau peu magnétique, notamment de l'aluminium, pour éviter de court-circuiter magnétiquement le rotor 1.

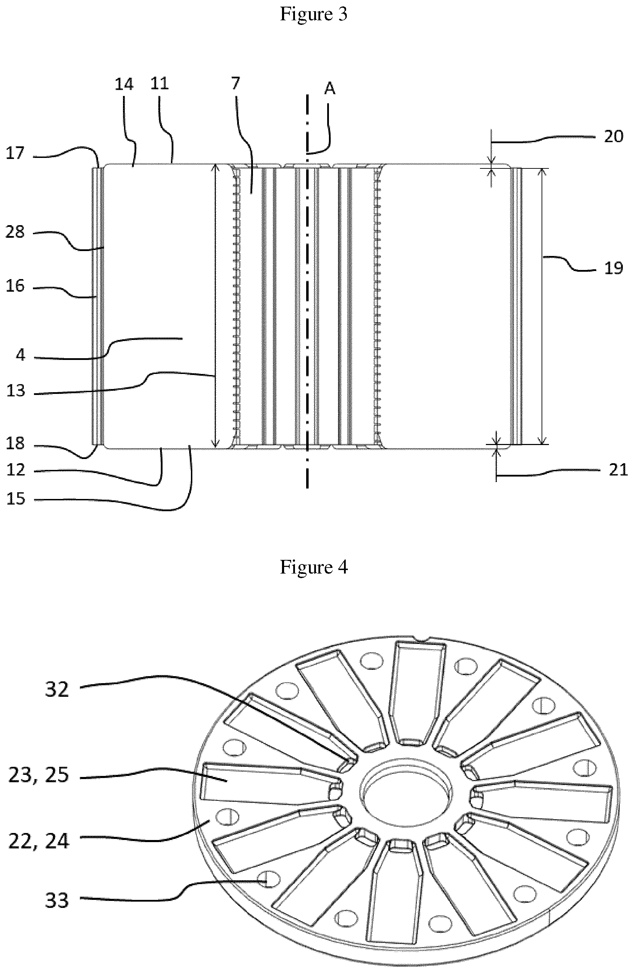

La figure 4 représente un des premier flasque de fermeture 22 et deuxième flasque de fermeture 24. Un moyen de fixation 6 peut permettre la fixation des premier flasque de fermeture 22 et deuxième flasque de fermeture 24 sur le corps de rotor 7. Selon l'invention et comme représenté sur les figures le moyen de fixation 6 est un ensemble de vis et écrous. Le corps de rotor 7 comprend des premiers trous 27 (représentés sur la figure 2). Les premier flasque de fermeture 22 et deuxième flasque de fermeture 24 comprennent des deuxièmes trous 33. Les premiers trous 27 et les deuxièmes trous 33 permettent le passage de la tige des vis du moyen de fixation 6. Le serrage de l'écrou du moyen de fixation 6 sur la vis permet d'enserré le corps de stator 7 entre le premier flasque de fermeture 2 et le deuxième flasque de fermeture 24.

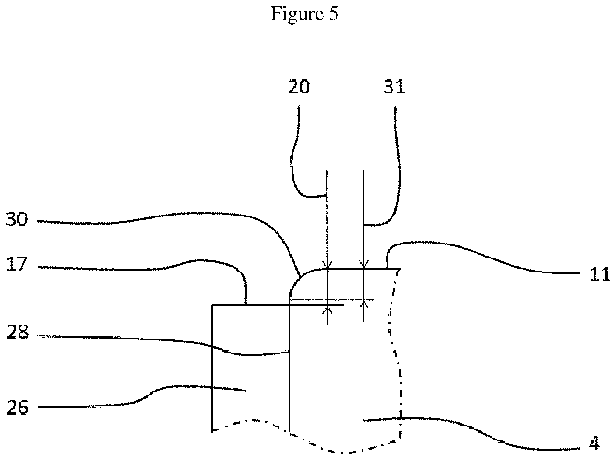

La figure 5 représente une vue schématique partielle de détail de l'aimant permanent 4 et de la partie de maintien 16 du rotor 1 représenté sur la figure 3. Pour faciliter la compréhension de la figure 5, la plaquette 29 n'a pas été représentée.

La première extrémité 14 de l'aimant permanent 4 comprend une première face de jonction 30 entre une cinquième face 28 de l'aimant permanent 4 maintenue par la partie de maintien 16 notamment la dent 26 et la première face 11 de l'aimant permanent. La première face de jonction 30 est par exemple un congé.

La cinquième face 28 de l'aimant permanent 4 est par exemple plane. De même la première face 11 de l'aimant permanent est par exemple plane.

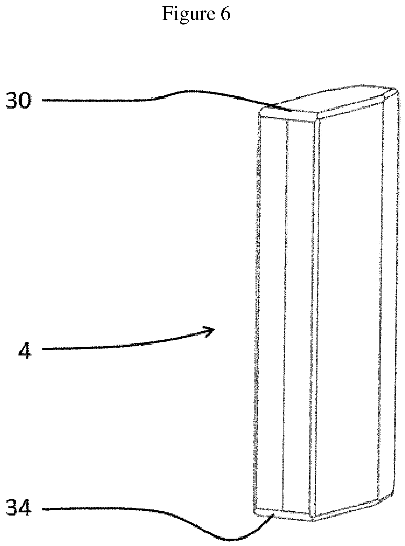

La figure 6 représente l'aimant permanent 4 avec la première face de jonction 30.

La première face de jonction 30 fait face au stator 8 et s'étend sur une cinquième longueur 31 dans la direction de l'axe de rotation A. La cinquième longueur 31 est par exemple comprise entre 0,8 et 1,2 fois la troisième longueur 20.

De manière similaire la deuxième extrémité 15 de l'aimant permanent 4 comprend une deuxième face de jonction 34, notamment un congé, entre la cinquième face 28 de l'aimant permanent 4 maintenue par la partie de maintien 16 et la deuxième face 12 de l'aimant permanent 4.

La deuxième face 12 de l'aimant permanent 4 est par exemple plane.

La deuxième face de jonction 34 fait face au stator 8 et s'étend sur une sixième longueur dans la direction de l'axe de rotation A. La sixième longueur est comprise entre 0,8 et 1,2 fois la quatrième longueur 21.

Dans un autre mode de réalisation non représenté la première et/ou la deuxième face de jonction est un chanfrein.

L'aimant permanent 4 peut être maintenu dans la cavité par un vernis ou une colle. Les premier flasque de fermeture 22 et deuxième flasque de fermeture 24 peuvent comprendre une ouverture 32 pour permettre l'introduction de la colle ou du vernis. L'ouverture 32 est par exemple réalisée dans respectivement le premier flasque de fermeture et le deuxième flasque de fermeture notamment respectivement dans le premier logement et le deuxième logement.

Dans le mode de réalisation représenté sur les figures, la machine électrique tournante est une machine électrique tournante à rotor 1 interne c'est-à-dire une machine électrique tournante dans laquelle le rotor 1 est radialement, par rapport à l'axe de rotation A, à l'intérieur du stator 3.

Dans d'autres mode de réalisation de l'invention, la machine électrique tournante est une machine électrique tournante à rotor externe c'est-à-dire une machine électrique tournante dans laquelle le rotor est radialement, par rapport à l'axe de rotation, à l'extérieur du stator.

## Revendications

1. Rotor (1) pour machine électrique tournante, apte à interagir avec un stator (3) de la machine électrique tournante et en rotation par rapport à un axe de rotation (A), le rotor (1) comprenant :
a. un corps de rotor (7) comportant une cavité (10),
b. un aimant permanent (4) disposé partiellement dans la cavité (10), l'aimant permanent (4) ayant une première longueur (13) selon la direction de l'axe de rotation (A) entre une première face (11) de l'aimant permanent (4) d'une première extrémité (14) de l'aimant permanent (4) et une deuxième face (12) de l'aimant permanent (4) d'une deuxième extrémité (15) de l'aimant permanent (4),
c. le corps de rotor (7) comprenant une partie de maintien (16) de l'aimant permanent (4) sur laquelle est en appui l'aimant permanent (4) et apte à être radialement en regard du stator (3), la partie de maintien (16) de l'aimant permanent ayant une deuxième longueur (19) selon la direction de l'axe de rotation (A) entre une troisième face (17) de la partie de maintien et une quatrième face (18) de la partie de maintien,
la première longueur (13) de l'aimant permanent (4) étant supérieure à la deuxième longueur (19) de la partie de maintien (16),
d. la première extrémité (14) de l'aimant permanent (4) dépassant, d'une troisième longueur (20) selon la direction de l'axe de rotation (A), de la cavité (10) par rapport à l'une des troisième face (17) de la partie de maintien (16) et quatrième face (18) de la partie de maintien (16), et
le rotor (1) étant **caractérisé en ce qu'**il comprend un premier flasque de fermeture (22), le premier flasque de fermeture (22) comprenant un premier logement (23) recevant la première extrémité (14) de l'aimant permanent (4) et un deuxième flasque de fermeture (24),
et **en ce que** le corps de rotor (7) comprend des premiers trous (27),
le premier et deuxième flasque de fermeture (22, 23) comprennent des deuxièmes trous (33),
les premiers et deuxième trous (27, 33) permettant le passage d'un moyen de fixation (6) composé d'un ensemble de vis et écrous.

2. Rotor (1) selon la revendication précédente dans laquelle la deuxième extrémité (15) de l'aimant permanent (4) dépasse, d'une quatrième longueur (21) selon la direction de l'axe de rotation (A), de la cavité (10) par rapport à l'autre des troisième face (17) de la partie de maintien (16) et quatrième face de la partie de maintien (16).

3. Rotor (1) selon la revendication 2, le deuxième flasque de fermeture (24) comprenant un deuxième logement (25) recevant la deuxième extrémité (15) de l'aimant permanent (4).

4. Rotor (1) selon l'une des revendications précédentes dans lequel la partie de maintien (16) comprend une dent (26) d'orientation circonférentielle par rapport à l'axe de rotation (A) pour maintenir radialement l'aimant permanent (4).

5. Rotor (1) selon l'une des revendications précédentes dans lequel la première extrémité (14) de l'aimant permanent (4) comprend une première face de jonction (30), notamment un congé, entre une cinquième face (28) de l'aimant permanent (4) maintenue par la partie de maintien (16) et la première face (11) de l'aimant permanent (4),
la première face de jonction (30) faisant face au stator (8) et s'étendant sur une cinquième longueur (31) dans la direction de l'axe de rotation (A), la cinquième longueur (31) étant comprise entre 0,5 et 2 fois la troisième longueur (20), notamment entre 0,6 et 1,5 fois la troisième longueur (20).

6. Rotor (1) selon l'une des revendications 2 à 5 dans lequel la deuxième extrémité (15) de l'aimant permanent (4) comprend une deuxième face de jonction (34), notamment un congé, entre une cinquième face (28) de l'aimant permanent (4) maintenue par la partie de maintien (16) et la deuxième face (12) de l'aimant permanent (4),
la deuxième face de jonction (34) faisant face au stator (8) et s'étendant sur une sixième longueur dans la direction de l'axe de rotation (A), la sixième longueur étant comprise entre 0,5 et 2 fois la quatrième longueur (21), notamment entre 0,6 et 1,5 fois la quatrième longueur.

7. Rotor (1) selon l'une des revendications précédentes dans lequel l'aimant permanent (4) est un aimant permanent de type ferrite.

8. Rotor (1) selon l'une des revendications précédentes dans lequel l'aimant permanent (4) est maintenu dans la cavité (10) par un vernis ou une colle.

9. Machine électrique tournante comprenant :
a. un rotor (1) selon l'une des revendications précédentes,
b. un stator (3).

10. Machine électrique selon la revendication 9 dans laquelle le rotor (1) est radialement, par rapport à l'axe de rotation, à l'intérieur du stator (3).

## Patentansprüche

1. Rotor (1) für eine rotierende elektrische Maschine, der mit einem Stator (3) der rotierenden elektrischen Maschine zusammenwirken kann und sich relativ zu einer Drehachse (A) dreht, wobei der Rotor (1) umfasst:
a. einen Rotorkörper (7) mit einem Hohlraum (10),
b. einen Permanentmagneten (4), der teilweise in dem Hohlraum (10) angeordnet ist, wobei der Permanentmagnet (4) eine erste Länge (13) in Richtung der Drehachse (A) zwischen einer ersten Fläche (11) des Permanentmagneten (4) eines ersten Endes (14) des Permanentmagneten (4) und einer zweiten Fläche (12) des Permanentmagneten (4) eines zweiten Endes (15) des Permanentmagneten (4) aufweist,
c. wobei der Rotorkörper (7) einen Halteabschnitt (16) für den Permanentmagneten (4) umfasst, auf dem der Permanentmagnet (4) aufliegt und der radial gegenüber dem Stator (3) angeordnet werden kann, wobei der Halteabschnitt (16) für den Permanentmagneten eine zweite Länge (19) in Richtung der Drehachse (A) zwischen einer dritten Fläche (17) des Halteabschnitts und einer vierten Fläche (18) des Halteabschnitts aufweist, wobei die erste Länge (13) des Permanentmagneten (4) größer ist als die zweite Länge (19) des Halteabschnitts (16),
d. wobei das erste Ende (14) des Permanentmagneten (4) um eine dritte Länge (20) in Richtung der Drehachse (A) aus dem Hohlraum (10) in Bezug auf eine der dritten Flächen (17) des Halteteils (16) und der vierten Flächen (18) des Halteteils (16) herausragt, und
der Rotor (1) **dadurch gekennzeichnet ist, dass** er umfasst:
einen ersten Verschlussflansch (22), wobei der erste Verschlussflansch (22) eine erste Aufnahme (23) umfasst, die das erste Ende (14) des Permanentmagneten (4) aufnimmt, und einen zweiten Verschlussflansch (24),
und dass der Rotorkörper (7) erste Löcher (27) umfasst,
wobei die erste und zweite Verschlussflansch (22, 23) zweite Löcher (33) umfassen,
wobei die ersten und zweiten Löcher (27, 33) den Durchgang eines Befestigungsmittels (6) ermöglichen, das aus einer Schrauben- und Mutteranordnung besteht.

2. Rotor (1) nach dem vorhergehenden Anspruch, wobei das zweite Ende (15) des Permanentmagneten (4) um eine vierte Länge (21) in Richtung der Drehachse (A) des Hohlraums (10) in Bezug auf die andere der dritten Fläche (17) des Halteteils (16) und der vierten Fläche des Halteteils (16) hervorsteht.

3. Rotor (1) nach Anspruch 2, wobei die zweite Verschlussplatte (24) eine zweite Aufnahme (25) umfasst, die das zweite Ende (15) des Permanentmagneten (4) aufnimmt.

4. Rotor (1) nach einem der vorstehenden Ansprüche, wobei der Halteabschnitt (16) einen Zahn (26) aufweist, der in Umfangsrichtung zur Drehachse (A) ausgerichtet ist, um den Permanentmagneten (4) radial zu halten.

5. Rotor (1) nach einem der vorstehenden Ansprüche, wobei das erste Ende (14) des Permanentmagneten (4) eine erste Verbindungsfläche (30), insbesondere eine Hinterschneidung, zwischen einer fünften Fläche (28) des Permanentmagneten (4), die vom Halteabschnitt (16) gehalten wird, und der ersten Fläche (11) des Permanentmagneten (4) aufweist,
wobei die erste Verbindungsfläche (30) dem Stator (8) zugewandt ist und sich über eine fünfte Länge (31) in Richtung der Drehachse (A) erstreckt, wobei die fünfte Länge (31) zwischen dem 0,5- und 2-fachen der dritten Länge (20) liegt, insbesondere zwischen dem 0,6- und 1,5-fachen der dritten Länge (20).

6. Rotor (1) nach einem der Ansprüche 2 bis 5, wobei das zweite Ende (15) des Permanentmagneten (4) eine zweite Verbindungsfläche (34) umfasst, insbesondere eine Hinterschneidung, zwischen einer fünften Fläche (28) des Permanentmagneten (4), die vom Halteabschnitt (16) gehalten wird, und der zweiten Fläche (12) des Permanentmagneten (4) aufweist,
wobei die zweite Verbindungsfläche (34) dem Stator (8) zugewandt ist und sich über eine sechste Länge in Richtung der Drehachse (A) erstreckt, wobei die sechste Länge zwischen dem 0,5- und 2-fachen der vierten Länge (21) liegt, insbesondere zwischen dem 0,6- und 1,5-fachen der vierten Länge.

7. Rotor (1) nach einem der vorstehenden Ansprüche, wobei der Permanentmagnet (4) ein Permanentmagnet vom Ferrit-Typ ist.

8. Rotor (1) nach einem der vorstehenden Ansprüche, wobei der Permanentmagnet (4) durch einen Lack oder einen Klebstoff in dem Hohlraum (10) gehalten wird.

9. Rotierende elektrische Maschine, umfassend:
a. einen Rotor (1) gemäß einem der vorstehenden Ansprüche,
b. einen Stator (3).

10. Elektrische Maschine gemäß Anspruch 9, wobei sich der Rotor (1) radial zur Drehachse innerhalb des Stators (3) befindet.

## Claims

1. A rotor (1) for a rotating electrical machine, capable of interacting with a stator (3) of the rotating electrical machine and rotating about an axis of rotation (A), the rotor (1) comprising:
a. a rotor body (7) having a cavity (10),
b. a permanent magnet (4) partially disposed in the cavity (10), the permanent magnet (4) having a first length (13) in the direction of the axis of rotation (A) between a first face (11) of the permanent magnet (4) at a first end (14) of the permanent magnet (4) and a second face (12) of the permanent magnet (4) at a second end (15) of the permanent magnet (4),
c. the rotor body (7) comprising a permanent magnet holding portion (16) on which the permanent magnet (4) rests and which is capable of being radially opposite the stator (3), the permanent magnet holding portion (16) having a second length (19) in the direction of the axis of rotation (A) between a third face (17) of the holding portion and a fourth face (18) of the holding portion, the first length (13) of the permanent magnet (4) being greater than the second length (19) of the holding portion (16),
d. the first end (14) of the permanent magnet (4) protruding, by a third length (20) in the direction of the axis of rotation (A), from the cavity (10) relative to one of the third face (17) of the holding part (16) and the fourth face (18) of the holding part (16), and
the rotor (1) being **characterized in that** it comprises:
a first closure flange (22), the first closure flange (22) comprising a first housing (23) receiving the first end (14) of the permanent magnet (4) and a second closure flange (24),
and **in that** the rotor body (7) comprises first holes (27),
the first and second closure flanges (22, 23) comprise second holes (33),
the first and second holes (27, 33) allowing the passage of a fastening means (6) composed of a set of screws and nuts.

2. Rotor (1) according to the previous claim, in which the second end (15) of the permanent magnet (4) protrudes, by a fourth length (21) in the direction of the axis of rotation (A), of the cavity (10) relative to the other of the third face (17) of the holding part (16) and the fourth face of the holding part (16).

3. Rotor (1) according to claim 2, wherein the second closure flange (24) comprises a second housing (25) receiving the second end (15) of the permanent magnet (4).

4. Rotor (1) according to one of the preceding claims, wherein the holding portion (16) comprises a tooth (26) oriented circumferentially with respect to the axis of rotation (A) to radially hold the permanent magnet (4).

5. Rotor (1) according to one of the preceding claims, wherein the first end (14) of the permanent magnet (4) comprises a first junction face (30), namely a fillet, between a fifth face (28) of the permanent magnet (4) held by the holding portion (16) and the first face (11) of the permanent magnet (4),
the first junction face (30) facing the stator (8) and extending over a fifth length (31) in the direction of the axis of rotation (A), the fifth length (31) being between 0.5 and 2 times the third length (20), in particular between 0.6 and 1.5 times the third length (20).

6. Rotor (1) according to one of claims 2 to 5, in which the second end (15) of the permanent magnet (4) comprises a second junction face (34), in particular a fillet, between a fifth face (28) of the permanent magnet (4) held by the holding part (16) and the second face (12) of the permanent magnet (4),
the second junction face (34) facing the stator (8) and extending over a sixth length in the direction of the axis of rotation (A), the sixth length being between 0.5 and 2 times the fourth length (21), in particular between 0.6 and 1.5 times the fourth length.

7. Rotor (1) according to one of the preceding claims, wherein the permanent magnet (4) is a ferrite-type permanent magnet.

8. Rotor (1) according to one of the preceding claims, wherein the permanent magnet (4) is held in the cavity (10) by a varnish or an adhesive.

9. Rotating electric machine comprising:
a. a rotor (1) according to one of the preceding claims,
b. a stator (3).

10. Electric machine according to claim 9, wherein the rotor (1) is radially, with respect to the axis of rotation, inside the stator (3).
